(19) **Europäisches Patentamt**
**European Patent Office**
**Office européen des brevets**

(11) **EP 1 914 518 A1**

(12) **EUROPEAN PATENT APPLICATION**

(43) Date of publication:
**23.04.2008 Bulletin 2008/17**

(51) Int Cl.:
***G01D 4/00*** (2006.01)

(21) Application number: **06022081.1**

(22) Date of filing: **20.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Vestel Elektronik Sanayi ve Ticaret A.S.
45030 Manisa (TR)**

(72) Inventors:
• **Yalcin, Yanki**
  **Organize Sanayi Bölgesi
  45030 Manisa (TR)**
• **Salt, Metin**
  **Organize Sanayi Bölgesi
  45030 Manisa (TR)**

(74) Representative: **Reynolds, Julian David et al
Hammonds
Karl-Scharnagl-Ring 7
D-80539 München (DE)**

(54) **Method and system for remote data collection**

(57) A method of determining, for each of one or more elemental periods (such as 1 hour), a statistically representative parameter value (e.g. amount of electricity, water, gas or oil consumed) for an entity (e.g. is a building, part thereof, or some geographical unit or area) and associated with the respective elemental period, comprising: obtaining a plurality of parameter values in succession, each parameter value relating to each of a plurality of successive data read periods, the data read periods including a first data read period and a plurality of further data read periods; wherein the further data read periods are of equal length and the first data read period is longer than the further data read periods by said elemental period. The method preferably comprises: obtaining a reading at the start of the first data read period; obtaining a reading at the end of the first data read period; for each of the plurality of further data read periods, obtaining a reading at the end of the further data read period; for the or each elemental period, determining the parameter value associated therewith as the difference between the readings obtained for two successive data read periods. The parameter values or reading are suitably converted to digital form and transmitted over a wire-based or wireless network. A metering unit for performing the method is also disclosed. A data processing system for determining a parameter value associated with each of one or more elemental periods, for each of one or more remote entities, using such metering units, is also disclosed.

FIG. 4

**Description**

The present invention relates to communications between remote devices, and more particularly to a method and system for remote data collection.

The invention has applications in numerous situations where there is a desire to minimize the communication line density (e.g. network traffic) and the cost of statistical knowledge accumulation in systems where networking is used to collect data. The data collected may be, for example, the amount of consumed electricity, gas, water, oil and the like, in a given measurement period. For example, in energy distribution systems, remote meter reading is a dense process that must be arranged and managed well, so as to prevent undesirably high densities and consequent errors in the line. This is a costly process, both for the system supplier and the network operator.

In energy distribution management systems, the statistical data obtained from the user (user's meter) is used to monitor and control the system. With the help of this data, energy cuts and tariff values can easily be set and people can be guided in energy usage, so as to decrease the energy density used in several sectors, time periods or areas. The data may or may not be displayed graphically. The gathered data may provide quantized values of consumption, or an indication such as that the consumption has doubled. Or it may show an excessive increase in the energy usage which may indicate a leakage in the system which needs to be repaired. Or the collected data could be used to adjust the energy usage in specific time periods. There are many other fields in which this statistical data can be used, in addition to energy distribution (where this statistical data is a very powerful data for the system management).

Collection of this large data involves significant expense and time. This data must be collected in as small time periods as possible, and with the lowest amount of cost that is also possible. The best way to supply this data is reading the meters in x (small time duration) periods and organize the statistical tables based on these values collected. For example, it can be very useful, for given household, to know the amount of electricity, oil or gas consumed during a 1 hour period (e.g. 6pm to 7pm; or at any other time); and then to assemble this data for various times and numerous households.

In relation to the data read/collection time period, there are several methods for accomplishing this. One of them is the manual meter read, in which technicians are employed to read the meters. There are lots of disadvantages in usage of this system: it can be a difficult, costly, error-prone, and possibly dangerous, process.

Another technique used to read the meters is Automatic Meter Read (AMR). An example of AMR is off-side meter read (OMR), also known as walk-by or drive by meter read. In such methods, meters are read via a network, rather than by technicians. Here the main problem is the density of communications that may occur in the network during the read process. Given the number of meters on the network (one per household/building) is considered, there will be a very large amount of network activity on the network during the data read/collection process. In particular, it is problematic for the network supplier that a large amount of data is passing through its network during small time periods. This can increase the cost of meter reading from the network supplier. In addition, transfer/carriage of this amount data can cause data corruption, due to communication density and data collision in the network. Also, as the amount of traffic increases, the absolute amount of errors will increase due to the error percentage factor.

JP-A-2001331883 discloses a centralized monitoring system by which continuous meter-reading can be performed. The centralized monitoring centre is provided with a daily meter-reading schedule for each of terminal equipment, and each of the controllers collects meter-reading data from a correspondent gas meter in response to the meter-reading request received from the centralized monitoring centre and transmits the collected meter-reading data to the centralized monitoring centre.

JP1282699 discloses a system to decrease the connection time on a communication line by disconnecting the communication line between a collecting centre and a meter reading unit during the meter reading action of the meter reading unit. A collecting centre transmits a meter reading command to execute the meter reading operation to a meter reading unit, the meter reading unit starts the meter reading operation, returns a reception response signal to the collecting centre, and disconnects the communication line between the collecting centre and the meter reading unit. Read-meter data obtained by a meter reading part are stored in memory, and when a collecting command is received from the collecting centre, the stored read-meter data are returned to the collecting centre, the communication line during the meter reading operation of the meter reading unit being disconnected.

US2006/0023853 discloses a system for the remote collection of data for the account of an entity, using a data communications network operated by a third party with respect to the entity. It is characterised in that the access to said data communication network by the entity for remote data collection is governed dynamically by said third party as a function of the spare data-carrying capacity of the communications network. The third party may thus grant the entity access to the communications network when the level of the third party's own data traffic on said network is below a determined threshold value, corresponding to an occupation below peak capacity. For automatic meter reading (AMR), where the network operator, e.g. a cellular telephone operator, is a third party with respect to the utilities company, the collected data is meter reading data from remote meters sent via GPRS interfaces.

Therefore, existing processes for periodic data readings for small time durations are problematic and need to be improved to decrease the cost, and increase the efficiency, of the system.

This invention seeks to overcome the aforementioned problems and provide an improved method and system for remote data collection.

The present invention provides a method of determining, for each of one or more elemental periods, a parameter value for an entity and associated with the respective elemental period, comprising: obtaining a plurality of parameter values in succession, each parameter value relating to each of a plurality of successive data read periods, the data read periods including a first data read period and a plurality of further data read periods; wherein the further data read periods are of equal length and the first data read period is longer than the further data read periods by said elemental period.

Preferably, wherein obtaining said plurality of readings comprises: obtaining a reading at the start of the first data read period; obtaining a reading at the end of the first data read period; for each of the plurality of further data read periods, obtaining a reading at the end of the further data read period; for the or each elemental period, determining the parameter value associated therewith as the difference between the readings obtained for two successive data read periods.

Preferably, each elemental period has the same length.

Preferably, the total number of readings taken is given by

$$y = x/\Delta x + 1,$$

where x is the measurement period whose statistical value is sought to be obtained, and $\Delta x$ is the length of said elemental periods.

Preferably, the overall duration to take all the readings is given by:

$$\tau = \left[ \left( \frac{x}{\Delta x} \right) + 1 \right] \cdot z,$$

where x is the measurement period whose statistical value is sought to be obtained, $\Delta x$ is the length of said elemental periods, and z is the length of said further data read periods.

Preferably, the steps of measuring the first parameter value and/or measuring the or each further parameter value comprise: using a meter to measure the parameter value over the first data read period or the or each further data read period, respectively, and generating an electronic signal representative of the first parameter value and the or each further parameter value, respectively.

The or each of said entities may be a building, part thereof, or some geographical unit or area, and the parameter value is preferably the amount of (a) electricity consumed, (b) water consumed, (c) gas consumed, or (d) oil consumed.

The method preferably further including transmitting said first parameter value and/or the or each further parameter value and/or the or each reading over a network to a remote location. In one (synchronous) embodiment, said first parameter value and/or the or each further parameter value and/or the or each reading is transmitted substantially immediately after a respective reading or determination of a respective parameter value. In another (asynchronous) embodiment, one or more of (i) said first parameter value and/or (ii) the or each further parameter value and/or (iii) the or each reading is stored in memory; and one or more stored parameters values and/or readings are transmitted at predetermined times, or following a predetermined time delay after a respective reading or determination of a respective parameter value.

According to another aspect of the invention there is provided a metering unit, associated with an entity, for determining a parameter value for the entity and associated with each of one or more elemental periods, comprising: a meter, conversion circuitry, and a processor; wherein the processor is operable for: obtaining a plurality of parameter values in succession, each parameter value relating to each of a plurality of successive data read periods, the data read periods including a first data read period and a plurality of further data read periods; wherein the further data read periods are of equal length and the first data read period is longer than the further data read periods by said elemental period.

Preferably, in obtaining said plurality of readings the processor is operable for: obtaining a reading at the start of the first data read period; obtaining a reading at the end of the first data read period; for each of the plurality of further data read periods, obtaining a reading at the end of the further data read period; for the or each elemental period, determining the parameter value associated therewith as the difference between the readings obtained for two successive data read periods.

Preferably, each elemental period has the same length.

Preferably, the total number of readings taken is given by

$$y = x/\Delta x + 1,$$

where x is the measurement period whose statistical value is sought to be obtained, and $\Delta x$ is the length of said elemental periods.

Preferably, the overall duration to take the readings is given by:

$$T = \left[ \left( \frac{x}{\Delta x} \right) + 1 \right] \cdot z,$$

where x is the measurement period whose statistical value is sought to be obtained,
$\Delta x$ is the length of said elemental periods, and
z is the length of said further data read periods.

Preferably, in measuring the first parameter value and/or measuring the or each further parameter value the processor is operable for: using a meter to measure the parameter value over the first data read period or the or each further data read period, respectively, and generating an electronic signal representative of the first parameter value and the or each further parameter value, respectively.

The metering or each of said entities may be a building, part thereof, or some geographical unit or area, and the parameter value is preferably the amount of (a) electricity consumed, (b) water consumed, (c) gas consumed, or (d) oil consumed.

The metering unit preferably further including a data transmission device, wherein the processor is further operable for transmitting said first parameter value and/or the or each further parameter value and/or the or each reading over a network to a remote location. In one (synchronous) embodiment, said processor is further operable for transmitting said first parameter value and/or the or each further parameter value and/or the or each reading substantially immediately after a respective reading or determination of a respective parameter value. In another (asynchronous) embodiment, the processor is further operable for storing in memory one or more of (i) said first parameter value and/or (ii) the or each further parameter value and/or (iii) the or each reading; and transmitting one or more stored parameters values and/or readings at predetermined times, or following a predetermined time delay after a respective reading or determination of a respective parameter value.

According to another aspect of the invention there is provided a data processing system for determining a parameter value associated with each of one or more elemental periods, for each of one or more remote entities, comprising: a processor; memory; and a communications device; wherein the processor is operable in conjunction with the memory and communications device for receiving, processing and transmitting data; the data processing system being adapted to be wire or wirelessly coupled to one or more remote metering units, the or each metering unit being associated with a respective entity; wherein, for the or each metering unit, the processor is operable for transmitting a plurality of polling communications, causing the metering unit to obtaining a plurality of parameter values in succession, each parameter value relating to each of a plurality of successive data read periods, the data read periods including a first data read period and a plurality of further data read periods; wherein the further data read periods are of equal length and the first data read period is longer than the further data read periods by said elemental period.

Preferably, for the or each metering unit, the processor is operable for transmitting a first polling communication, causing the metering unit to obtain a first reading, at the start of the first data read period; receiving the first reading from the metering unit; transmitting a second polling communication, causing the metering unit to obtain a second reading, at the end of the first data read period; receiving the second reading from the metering unit; for each of one or more further data read periods, transmitting a further polling communication, causing the metering unit to obtaining a further reading at the end of each of the further data read period(s); receiving the further reading(s) from the metering unit; and for the or each elemental period, determining the parameter value associated therewith as the difference between the readings obtained for two successive data read periods.

According to another aspect of the invention there is provided a programmable metering unit when suitably programmed for carrying out at least the steps of any of claims 1 to 8 of the appended claims.

According to another aspect of the invention there is provided a recordable, rewritable or storable medium having recorded or stored thereon data defining or transformable into instructions for execution by processing circuitry and corresponding to at least the steps of any of claims 1 to 8 of the appended claims.

According to another aspect of the invention there is provided a server computer incorporating a communications device and a memory device and being adapted for transmission on demand or otherwise of data defining or transformable into instructions for execution by processing circuitry and corresponding to at least the steps of any of claims 1 to 8 of the appended claims.

The present invention has advantages over known techniques, the main ones being as follows.

The techniques according to the invention decreases the amount that the network is used to a much shorter period (in the example one read a day instead of 24 reads), thereby also reducing costs paid for network usage.

Another advantage is for the network supplier. Instead of disturbing the network throughout the day, the network is used once in a period, so the density in the network and possible errors that may be caused due to large data transfer throughout the day are less of a problem or are eliminated.

In addition, overall measurement durations used to give the statistical values may be adjusted so as to prevent unwanted data. For example, if it is not desired to include weekends to be counted as statistical value source, it is possible to omit weekends from measurements. This method can be used and adapted to many more systems that use different assumptions and constraints.

Embodiments of the invention will now be described in detail, by way of example, with reference to the accompanying drawings, in which:

Figure 1 shows a system for remote data collection, according to one embodiment of the invention;
Figure 2 (PRIOR ART) illustrates schematically conventional remote data collection methods;
Figure 3 shows a metering unit according to one embodiment of the invention; and
Figure 4 illustrates schematically the remote data collection method according to one embodiment of the invention.

In the description and drawings, like numerals are used to designate like elements. Unless indicated otherwise, any individual design features and components may be used in combination with any other design features and components disclosed herein.

Although the following description, for illustration purposes, relates to the measurement of consumption of a resource (e.g. electricity), and determining what is consumed in a specific (elemental) period, the invention is applicable in any situation where data representing an activity or resource, and/or associated with an entity, and associated with a specific time period, is to be determined.

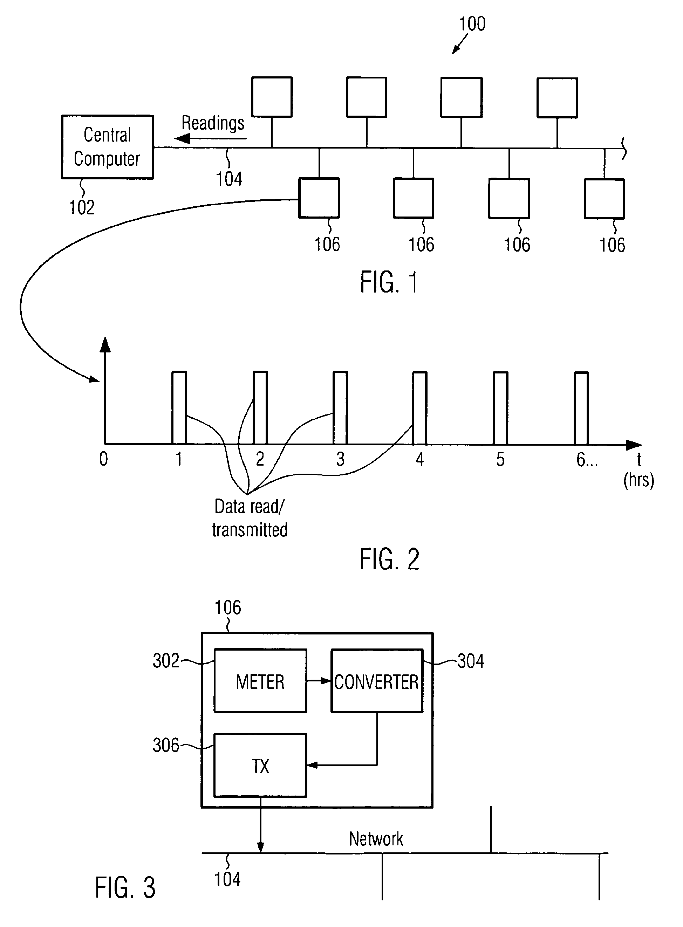

Figure 1 shows a system for remote data collection, according to one embodiment of the invention. The system, generally designated 100, includes a central computer 102, coupled via a fixed line network (e.g. internet) 104 to multiple metering units 106. Each metering unit 106 is, for example, located at or within a residential unit such as a house, apartment or office, although it may cover a larger or smaller scale than this. As is discussed hereinafter, data (indicative, for example, of electricity or other resource consumed) is periodically sent over the network 104 from each metering unit 106 to the central computer 102.

It will be appreciated by persons skilled in the art that the method to collect readings data may vary. Although Fig. 1 represents an embodiment of how the data may be collected, this is not the only way. The metering units 106 could be much more dispersed, e.g. 10 metering units might be connected to one computer (not shown), 10 meters to another computer (not shown) etc.; then these computers might be connected to a central computer. The network 104 could be a wireless one (such as GPRS) or it could be a cable network. It is also possiblethat it is a combination of wireless and cabled networks. There is no restriction regarding the network type.

Figure 2 (PRIOR ART) illustrates schematically conventional remote data collection methods. Here, a data read/transmittion operation (represented by the pulses) is performed by each meter on an hourly basis. It will be appreciated that, for a large number of metering units, this causes the abovementioned communications density and network traffic problems.

Figure 3 shows a metering unit 106 according to one embodiment of the invention. Each metering unit 106 may include suitable processing circuitry (such as a microprocessor) and volatile memory (not shown), as well as a meter 302 (such as an analog electricity consumption meter), a converter 304 (for example a well known ADC), and a data transmission device 306 (for example a modem). As is known to persons skilled in the art, the thus described metering unit 106 may, based on suitably programmed routine, periodically or aperiodically transmitted digitals signals (for example using TCP/IP or GPRS protocols) representing the readings, following their measurement by the meter 302.

Alternatively, the central computer 102 (see Fig. 1) may be suitable programmed for periodically or aperiodically transmitted polling signals (for example using TCP/IP or GPRS protocols) to each metering unit 106 (e.g. to each metering unit at different times), the polling signals prompting the metering unit to commence a meter reading period and/or to transmit a digital signal representing the readings, following their measurement by the meter 302.

In any event, the operations of data reading and transmission of the reading over the network may be performed synchronously or asynchronously.

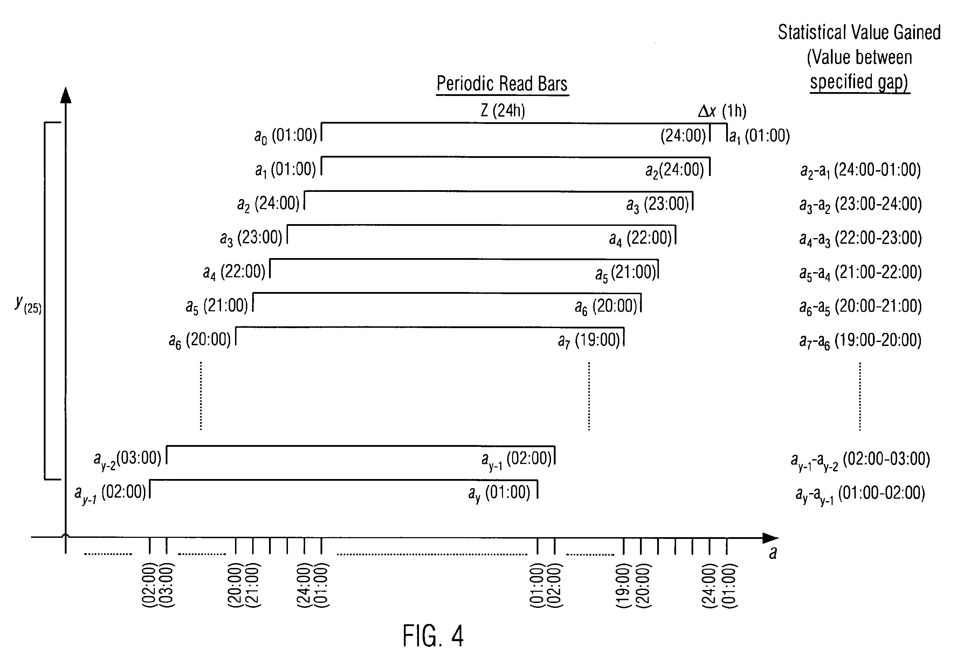

Figure 4 illustrates schematically the remote data collection method according to one embodiment of the invention. Data read values are sorted under the "Statistical Values Gained" table as shown. With the help of this table, an overall estimation for a user's energy usage can easily be made, giving the energy distributor knowledge about user's patterns/habits. The methods employed by the invention will now be discussed in more detail.

Preferably, the method is based on an improved scheme of data read periods in an AMR system. Meters are read through the network supplied by the network operator.

Referring to Fig. 4, the notation used hereinafter will now be explained.

z: periodic read duration (i.e. the period between successive readings, apart from that between the first and seconds readings, which is equal to $(z+\Delta x)$; see hereinafter). z is for example 24 or 48 hours.

x: the period for which a statistical value is sought to be gained. x is, for example, 24 hours.

$\Delta x$ : precision (also known as the elemental period). Usually hourly precision is used, so $\Delta x$ is, for example, 1 hour).

y: number of measurements needed to be performed for collection of enough data for statistical representation. y is given by

$$y = \left( x \middle/ \Delta x \right) + 1 \qquad \text{(eq.3)}$$

(Thus, y is, for example, 25 times (readings)).

T: total duration (time period necessary to take all the readings. T is given by

$$T = \left[ \left( x \middle/ \Delta x \right) + 1 \right] \cdot z \qquad \text{(eq.4)}$$

i.e. T = y.z

Thus, T is, for example, 25x48 = 1200 hours, = 1200 / 24 = 50 days.

Example 1.

Here:

x= 48 hrs,
$\Delta x$ = 1 hr, and
z = 48 hrs.

This gives y = (48/1)+1 = 49.
The total measurement time in hours is y.z = 49.48
The total measurement time in days is y.z/24 = 49.48/24 = 98 days.

In this example, if the meters are going to be measured once in every 48 hours and if hourly statistics of all 48 hours during that period are sought, then this measurement needs to be carried out (48/1)+1 = 49 times (=y). Since every measurement is performed once in z/24 = 48/24 = 2 days, the process of obtaining all hourly statistical values of a complete 48 hour-period will take y.z/24 = 49 x 2 = 98 days.

Example 2.

Here:

x= 24 hrs,
$\Delta x$ = 1 hr, and
z = 48 hrs.

This gives y = (24/1)+1 = 25.
The total measurement time in hours is y.z = 25.48
The total measurement time in days is y.z/24 = 25.48/24 = 50 days.

In this example, the statistical values are sought for only a 24 hour-period, with hourly precision, while measuring the meters once in every 48 hours. Thus, (24 / 1) + 1 = 25 times (=y) measurement is enough to collect the data. Consequently, the number of days required to obtain the hourly statistical values of 24 hour-period is y.z/24 = 25 x (48 / 24) = 50 days.

Data collected after total duration (y.z), provides the statistical values for each of the elemental ($\Delta x$) time periods. The first data read period is of length $z+\Delta x$ (24 + 1 = 25 hours, in one example) and until the completion of the total duration (for all measurements) the other (further) periods are of length z.

To give an idea of the selection of the periods, the following illustration is provided. x must be long enough to control and execute AMR activities, and this is suitable one day (24hrs). $\Delta x$ must be short enough to take advantage of collected statistical values, so this is suitably chosen to be one hour. Thus, y is calculated as $^{24}/_1$ + 1 = 25 times (readings).

With particular reference to Fig. 4, the instantaneous meter reading taken by the system are given by

$$a_n = data\_at\_n \qquad \text{(eq.7)}$$

$$0 \le n \le y \qquad n \in N \ (Natural\_Numbers) \quad \text{(eq.8)}$$

Thus, the resource usage (e.g. electricity) for the first data read period (duration, e.g. 25 hrs) is given by $a_1$-$a_0$. The resource usage (e.g. electricity) for the further data read periods (duration, e.g. 24 hrs) is given by

$a_2$-$a_1$,
$a_3$-$a_2$,
$a_4$-$a_3$,
$a_5$-$a_4$,
... and so on.

Various variations and extensions to the above embodiments are possible. According to embodiments of the invention, the read and transmission of the data may either be achieved in synchronous processes, e.g. one way to transmit data is to transmit it as soon as it is read, or another solution is to read data and store it in a memory (not shown) and after a period of time to transmit all the data that has been stored (asynchronous mode).

In respect of the first method (synchronous), there is no need for an additional memory to store meter read data. This decreases the cost of the meter and helps the system supplier to take action in emergency cases faster, since data transmit occurs in more frequent time periods. In case the period of transmissions is small, then the network density will be very high. The invention decreases the density level of the network.

In accordance with the second method (asynchronous) mentioned above, there is need for memory (not shown) and a real time clock (not shown) implemented on the meter, which will increase the initial cost of meter hardware. This action may disables/impairs the rapid reactions to emergency cases. On the other hand, the network will not be used frequently, but large amount of data will be transferred at once in a longer period, and this action is more prone to errors than the previous method. The invention decreases both the required memory capacity -- e.g. less data will be stored -- and also the network density and error probability when compared to existing systems.

In both cases the common point is that, according to the invention, less data will be sufficient to determine the usage statistics during any time period when compared to current methods. For example, in accordance with the embodiment provided in the application, measuring data merely in daily (24 hours) periods (once a day), all hourly statistical values of energy usage of a day could be derived in 25 days without the need for measuring a larger amount of data on an hourly basis to obtain such hourly statistical values.

**Claims**

1. A method of determining, for each of one or more elemental periods, a parameter value for an entity and associated with the respective elemental period, comprising:

   obtaining a plurality of parameter values in succession, each parameter value relating to each of a plurality of successive data read periods, the data read periods including a first data read period and a plurality of further data read periods;
   wherein the further data read periods are of equal length and the first data read period is longer than the further data read periods by said elemental period.

2. The method of claim 1, wherein obtaining said plurality of readings comprises:

obtaining a reading at the start of the fir st data read period;
obtaining a reading at the end of the first data read period;
for each of the plurality of further data read periods, obtaining a reading at the end of the further data read period;
for the or each elemental period, determining the parameter value associated therewith as the difference between the readings obtained for two successive data read periods.

3. The method of claim 1 or 2, wherein each elemental period has the same length.

4. The method of claim 2 or 3, wherein the total number of readings taken is given by:

$$y = x/\Delta x + 1,$$

where x is the measurement period whose statistical value is sought to be obtained, and
$\Delta x$ is the length of said elemental periods.

5. The method of claim 2 or 3, wherein the overall duration to take all the readings is given by:

$$T = \left[ \left( \frac{x}{\Delta x} \right) + 1 \right] \cdot z,$$

where x is the measurement period whose statistical value is sought to be obtained,
$\Delta x$ is the length of said elemental periods, and
z is the length of said further data read periods.

6. The method of any of the preceding claims, wherein the steps of measuring the first parameter value and/or measuring the or each further parameter value comprise:

using a meter to measure the parameter value over the first data read period or the or each further data read period, respectively, and
generating an electronic signal representative of the first parameter value and the or each further parameter value, respectively.

7. The method of any of the preceding claims, wherein one of said entity is a building, part thereof, or some geographical unit or area, and the parameter value is the amount of (a) electricity consumed, (b) water consumed, (c) gas consumed, or (d) oil consumed.

8. The method of any of the preceding claims, further including transmitting said first parameter value and/or the or each further parameter value and/or the or each reading over a network to a remote location.

9. The method of claim 8, wherein said first parameter value and/or the or each further parameter value and/or the or each reading is transmitted substantially immediately after a respective reading or determination of a respective parameter value.

10. The method of claim 8, wherein
one or more of (i) said first parameter value and/or (ii) the or each further parameter value and/or (iii) the or each reading is stored in memory; and
one or more stored parameters values and/or readings are transmitted at predetermined times, or following a predetermined time delay after a respective reading or determination of a respective parameter value.

11. A metering unit, associated with an entity, for determining a parameter value for the entity and associated with each of one or more elemental periods, comprising:

a meter,
conversion circuitry, and

a processor;

wherein the processor is operable for:

obtaining a plurality of parameter values in succession, each parameter value relating to each of a plurality of successive data read periods, the data read periods including a first data read period and a plurality of further data read periods;

wherein the further data read periods are of equal length and the first data read period is longer than the further data read periods by said elemental period.

12. The metering unit of claim 11, wherein in obtaining said plurality of readings the processor is operable for:

obtaining a reading at the start of the first data read period;

obtaining a reading at the end of the first data read period;

for each of the plurality of further data read periods, obtaining a reading at the end of the further data read period;

for the or each elemental period, determining the parameter value associated therewith as the difference between the readings obtained for two successive data read periods.

13. The metering unit of claim 11 or 12, wherein each elemental period has the same length.

14. The metering unit of claim 13, wherein the total number of readings taken is given by

$$y = x/\Delta x + 1,$$

where x is the measurement period whose statistical value is sought to be obtained, and
$\Delta x$ is the length of said elemental periods.

15. The metering unit of any of claims 11 to 14, wherein the overall duration to take all the readings is given by:

$$\tau = \left[\left(\frac{x}{\Delta x}\right)+1\right]\cdot z,$$

where x is the measurement period whose statistical value is sought to be obtained,
A x is the length of said elemental periods, and
z is the length of said further data read periods.

16. The metering unit of any of claims 11 to 15, wherein in measuring the first parameter value and/or measuring the or each further parameter value the processor is operable for:

using a meter to measure the parameter value over the first data read period or the or each further data read period, respectively, and

generating an electronic signal representative of the first parameter value and the or each further parameter value, respectively.

17. The metering unit of any of claims 11 to 16, wherein one of said entity is a building, part thereof, or some geographical unit or area, and the parameter value is the amount of (a) electricity consumed, (b) water consumed, (c) gas consumed, or (d) oil consumed.

18. The metering unit of any of claims 1 to 17, further including a data transmission device, wherein the processor is further operable for transmitting said first parameter value and/or the or each further parameter value and/or the or each reading over a network to a remote location.

19. The method of claim 18, wherein said processor is further operable for transmitting said first parameter value and/or the or each further parameter value and/or the or each reading substantially immediately after a respective reading or determination of a respective parameter value.

**20.** The method of claim 18, wherein the processor is further operable for

storing in memory one or more of (i) said first parameter value and/or (ii) the or each further parameter value and/or (iii) the or each reading; and

transmitting one or more stored parameters values and/or readings at predetermined times, or following a predetermined time delay after a respective reading or determination of a respective parameter value.

**21.** A data processing system for determining a parameter value associated with each of one or more elemental periods, for each of one or more remote entities, comprising:

a processor;
memory; and
a communications device;
wherein the processor is operable in conjunction with the memory and communications device for receiving, processing and transmitting data;
the data processing system being adapted to be wire or wirelessly coupled to one or more remote metering units, the or each metering unit being associated with a respective entity; wherein, for the or each metering unit, the processor is operable for
transmitting a plurality of polling communications, causing the metering unit to obtaining a plurality of parameter values in succession, each parameter value relating to each of a plurality of successive data read periods, the data read periods including a first data read period and a plurality of further data read periods;
wherein the further data read periods are of equal length and the first data read period is longer than the further data read periods by said elemental period.

**22.** The data processing system of claim 21, wherein, for the or each metering unit, the processor is operable for
transmitting a first polling communication, causing the metering unit to obtain a first reading, at the start of the first data read period; receiving the first reading from the metering unit;
transmitting a second polling communication, causing the metering unit to obtain a second reading, at the end of the first data read period;
receiving the second reading from the metering unit;
for each of one or more further data read periods, transmitting a further polling communication, causing the metering unit to obtaining a further reading at the end of each of the further data read period(s);
receiving the further reading(s) from the metering unit;
for the or each elemental period, determining the parameter value associated therewith as the difference between the readings obtained for two successive data read periods.

**23.** A programmable metering unit when suitably programmed for carrying out at least the steps of any of claims 1 to 10.

**24.** A recordable, rewritable or storable medium having recorded or stored thereon data defining or transformable into instructions for execution by processing circuitry and corresponding to at least the steps of any of claims 1 to 10.

**25.** A server computer incorporating a communications device and a memory device and being adapted for transmission on demand or otherwise of data defining or transformable into instructions for execution by processing circuitry and corresponding to at least the steps of any of claims 1 to 10.

100

Central
Computer

Readings

104

102

106    106    106    106

FIG. 1

Data read/
transmitted

0    1    2    3    4    5    6...    t
(hrs)

FIG. 2

106

302    METER → CONVERTER    304

306    TX

Network

104

FIG. 3

FIG. 4

EP 1 914 518 A1

**European Patent Office**

**EUROPEAN SEARCH REPORT**

Application Number

EP 06 02 2081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 918 380 A (SCHLEICH MICHAEL G [US] ET AL) 6 July 1999 (1999-07-06) * column 2, line 33 - line 47; figure 3 * ----- | 1-25 | INV. G01D4/00 |

| | | | TECHNICAL FIELDS SEARCHED (IPC) |
|---|---|---|---|
| | | | G01D |

The present search report has been drawn up for all claims

| Place of search | Date of completion of the search | Examiner |
|---|---|---|
| The Hague | 27 March 2007 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 2081

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2007

| Patent document cited in search report | Publication date | Patent family member(s) | Publication date |
|---|---|---|---|
| US 5918380 A | 06-07-1999 | NONE | |

EPO FORM P0459

For more details about this annex : see Official Journal of the European Patent Office, No. 12/82

**EP 1 914 518 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001331883 A
- JP 1282699 A
- US 20060023853 A